(19) Europäisches Patentamt
European Patent Office
Office européen des brevets

(11) Publication number: 0 346 073 B1

(12) EUROPEAN PATENT SPECIFICATION

(45) Date of publication of patent specification: 20.10.93 (51) Int. Cl.5: C04B 33/28

(21) Application number: 89305700.0

(22) Date of filing: 06.06.89

# (54) Manufacture of non-whiteware ceramic articles.

(30) Priority: 06.06.88 US 202626

(43) Date of publication of application:
13.12.89 Bulletin 89/50

(45) Publication of the grant of the patent:
20.10.93 Bulletin 93/42

(84) Designated Contracting States:
AT BE CH DE ES FR GB IT LI LU NL SE

(56) References cited:
WO-A-89/02355
US-A- 3 418 401

DERWENT ACCESSION NO. 83-6 879, Ouestel Telesystem (WPIL), DERWENT PUBLICATIONS LTD., London, & SU-A-912 702

(73) Proprietor: THE DOW CHEMICAL COMPANY
2030 Dow Center,
Abbott Road
Midland, MI 48640(US)

(72) Inventor: Croft, Alan P.
325 Petunia
Lake Jackson Texas 77566(US)
Inventor: Koblinski, Brian D.
2719, Glenn Lakes
Texas 77549 - Missouri City(US)

(74) Representative: Burford, Anthony Frederick et al
W.H. Beck, Greener & Co.
7 Stone Buildings
Lincoln's Inn
London WC2A 3SZ (GB)

EP 0 346 073 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the preparation of non-whiteware ceramic articles.

Ceramic articles are generally manufactured by processes involving pressing, casting or plastic-forming. Examples of pressing, at room or hot temperatures, include uniaxial pressing, isostatic pressing and dry pressing. Examples of casting include slip casting, drain casting, tape casting, thixotropic casting, pressure casting and soluble casting. Examples of plastic-forming methods include extrusion, injection molding, transfer molding and compression molding.

Slip casting is a well-known and ancient process by which ceramic articles are prepared. In this method, the particulate matter is suspended in a medium, often water, to form a slip. The slip is poured into a mold and a portion of the medium is drawn out of the casting slip through the mold leaving a cast behind in the mold. The mold and cast are then separated and the cast article is processed to give it the final properties desired. Slip casting is employed in the manufacture of a wide variety of products, both whiteware and non-whiteware, ranging from sanitary ware to laboratory ware to electronic ceramics.

Dry pressing is also a well-known practice by which ceramic articles are prepared. In dry pressing, a particulate material is suspended in a slip medium, generally with other additives selected to control both the properties of the slip and the article ultimately prepared from the slip. The medium is removed to prepare a powder having particles of the desired size. This powder is then placed into dies having the desired shape and pressure is applied to form the green ceramic article which undergoes additional processing. Pressure is applied either unilaterally or from all directions as in isostatic dry pressing. Pressing operations may be carried out at room or elevated temperatures.

Extrusion is another well-known process for the formation of ceramic articles. In a typical extrusion process, a ceramic powder is moistened and then kneaded or pugged until it forms a plastic mass which is extruded through a die to form the green ceramic article which then undergoes additional processing.

A major problem experienced in the preparation of non-whiteware ceramic articles by any of the methods known in the art as identified or described above is low green strength. Low green strength of articles is detrimental, resulting in breakage of articles during processing.

What is needed is an additive, useful in casting, pressing and plastic-forming processes for the manufacture of non-whiteware ceramic articles that results in increased green strength of the articles produced and that does not adversely impact other properties of the articles or the slip from which they are prepared.

SU-A-912702 discloses the use of polyethylene polyamine in an enamel slip for producing uniform electrically insulating coatings. The slip contains 100 parts by weight frit, 25-70 parts by weight titanium dioxide, 125-150 parts by weight butanol and 0.43 to 1.25 parts by weight polyethylene polyamine. It is applied to the articles by electrophoresis and subsequently dried and fired.

US-A-3418401 discloses the use of ethylene diamine to reduce the gelling resulting from the addition of flowers of sulfur to slip composition containing dead burned magnesite. The slip composition is formed by adding 4 to 7 weight percent aqueous tempering fluid to a mixture of refractory materials containing dead burned magnesite with 0.2 to 5 weight percent flowers of sulfur and 0.1 to 1 weight percent ethylenediamine.

WO-A-89/02355 discloses the use of a (poly)alkylene polyamine to increase the casting rate of a slip composition for making whiteware ceramic articles and to increase the green strength of the cast article. The specified particulate materials include clays, aluminosilicates and silica. A binder, such as a latex, optionally is included to improve the green strength of the whiteware ceramic articles. This document was published (23rd March 1989) after the priority date (6th June 1988) claimed for the present Application. It does not designate Spain.

In one aspect, the present invention is a process for the preparation of non-whiteware ceramic articles employing such an additive. The process comprises preparing a slip composition that includes a slip medium, a dispersant, a particulate material and a (poly)alkylene polyamine and, using conventional casting, pressing or plastic-forming ceramic processing, preparing non-whiteware articles from the slip composition.

The (poly)alkylene polyamine additive of the invention, preferably having an average molecular weight of less than 1,000, is used in an amount effective to increase the green strength of the non-whiteware ceramic articles prepared from the slip composition.

The (poly)alkylene polyamine additive in the slip composition may also include a binder mixed with the polyamine prior to its addition to the slip composition. When used in this way, the binder is added in an amount sufficient to maintain the viscosity and the cast weight of articles prepared from the slip composition.

In addition, the slip composition may also include other additives such as binders and pH regulators in addition to the binder mixed with the (poly)alkylene polyamine.

Surprisingly, the use of a (poly)alkylene polyamine slip casting additive in a slip composition for the preparation of non-whiteware ceramic articles, conventionally having a low green strength, results in processed articles having improved green strength.

The process of the present invention advantageously employs a particulate material, a slip medium, a dispersant, a (poly)alkylene polyamine and, optionally, a binder or mixture of binders for use in a method to prepare non-whiteware ceramic articles.

For purposes of this invention, the terms "slip" and "slip composition" include the slips or slip compositions useful in slip casting; slurries or suspensions from which powders are made for use in pressing; and the slurries or powders which are used in plastic-forming processes such as extrusion. Non-whiteware ceramic articles are ceramic articles other than those classified as whiteware which are pottery, porcelain and similar fine-grained porcelainlike compositions as discussed by Kingery et al. in Introduction to Ceramics, 2nd Edition, John Wiley and Sons (1984) at page 16.

The particulate material can be any mineral that can be suspended in a slip medium or formed into a ceramic powder and then processed to form non-whiteware ceramic articles such as laboratory ware or ceramics having electronic applications. Non-limiting examples of such minerals include alumina, aluminum nitride, Zirconium oxide, mullite, silica, yttrium oxide, spinel, silicon carbide, silicon nitride, titanium dioxide, iron oxide, calcium oxide, boron carbide, boron nitride or mixtures thereof. Preferred minerals include alumina, zirconium oxide, silicon carbide and silicon nitride or mixtures thereof.

The slip medium or liquid used in the preparation of the slip compositions from which the non-whiteware ceramic articles are prepared serves to suspend the particulate material until it can be further processed in the case of casting and pressing manufacturing methods or allow proper mixing as in plastic-forming manufacturing methods. The slip medium may be organic, inorganic or a mixture thereof. Several slip media are well-known to those skilled in the art of ceramic processing. Examples of slip media include alcohols, ketones, hydrocarbons, chlorinated hydrocarbons and water. A preferred slip medium is water. The particulate material can be employed in any amount which will result in a formed article. Typically, the amount of particulate material employed is 5 to 95 weight percent based on the total weight of the slip. Preferably, the amount of particulate material employed is 15 to 90 weight percent. However, the slip composition can vary widely and can contain more or less of the particulate material. Mixtures of slip media can be employed.

The dispersants useful in the practice of this invention are those known to one skilled in the art of non-whiteware ceramic processing. Typically, the dispersants are polyelectrolytes and comprise a cationic species such as an ammonium or sodium ion on a polymeric carrier. Non-limiting examples of dispersants useful in the practice of this invention include the sodium or ammonium salts of polyacrylates or polyacrylamides. Other useful dispersants include ammonium lignosulfonate and other lignosulfonates.

Additives which are well-known in the art of ceramic processing can also be employed in addition to the particulate material and the slip medium. Non-limiting examples of such additional additives include binders, magnesium carbonate, citric acid and aqueous ammonia as pH modifiers. The nature and amount of the additives used control the characteristics of the slip composition and articles which are prepared therefrom and will be selected by one skilled in the art based on the non-whiteware ceramic article being produced and the processing method being used.

The slip formulations which are useful in the process of this invention are those formulations useful in the production of non-whiteware ceramic articles such as laboratory ware, refractories, electronic ceramics and articles requiring great wear resistance such as nozzles for sand blasting and lining for coal chutes. These formulations generally lack high green strength. The (poly)alkylene polyamine additives of this invention are useful in increasing the green strength of the articles prepared from these slip formulations. In a preferred embodiment, the green strength is increased by at least 5 percent. It is more preferred that the green strength is increased by 25 percent and most preferred that it is increased by 50 percent. Green strength can be measured by criteria known to one skilled in the art such as by measurements of modulus of rupture or of compressive strength.

(Poly)alkylene polyamines are well-known compounds. For the purposes of the present invention, it is preferred to employ a (poly)alkylene polyamine having an average molecular weight of less than 1,000, more preferably less than 800. Examples of (poly)alkylene polyamines include ethylenediamine, triethylenetetramine, tetraethylenepentamine, pentaethylenehexamine, hexaethyleneheptamine, piperazine, aminoethylpiperazine, propylenediamine, butylenediamine, pentamethylenediamine, hexamethylenediamine, diethylenetriamine, dipropylenetriamine, dibutylenetriamine, bis(pentamethylene)triamine, bis-(hexamethylene)triamine, tripropylenetetramine, tris(hexamethylene)tetramine, tetrapropylenepentamine,

tetrabutylenepentamine, tetrakis(pentamethylene)pentamine, tetrakis(hexamethylene)pentamine, pentapropylenehexamine, pentabutylenehexamine, pentakis(pentamethylene)hexamine, pentakis-(hexamethylene)hexamine, bis(aminopropyl)ethylenediamine, bis(aminopropyl)diethylenetriamine, and tris-(aminopropyl)ethylenediamine. The preferred (poly)alkylene polyamines generally have the formula:

$$H_2N-\left[(CH_2)_n-(CH_2-CH_2-NH)_m\right]_p-H$$

wherein n is zero to 6, m is 1 to 6, and p is 1 to 15, with the proviso that n and m can vary independently within a molecule from one repeating unit to the next. Preferably, n is zero, p is 1 and m is 3 to 6.

Thus, preferred (poly)alkylene polyamines for use in the practice of this invention include ethylene polyamines. It is also preferred that the ethylene polyamines used have an average molecular weight greater than 150 and less than 800. Examples of preferred (poly)alkyene polyamines include triethylenetetraamine, tetraethylenepentamine, pentaethylenehexamine, hexaethyleneheptamine and mixtures thereof.

The (poly)alkylene polyamine additives of this invention may be used individually or mixtures of (poly)-alkylene polyamines may be used. For example, some (poly)alkylene polyamines such as tetraethylenepentamine (hereinafter TEPA) are generally available commercially only as a mixture of isomers having similar boiling points. Such mixtures are suitable for use in the practice of this invention. In addition to the linear isomers of the (poly)alkylene polyamines, branched and cyclic isomers of these compounds may also be employed.

The (poly)alkylene polyamine additive is employed in an amount effective to increase the green strength of prepared articles. It is preferred that the (poly)alkylene polyamine additive be used in an amount of at least 0.0001 and no greater than 2 weight percent based on the solids content of the slip. It is more preferred that the amount of the (poly)alkylene polyamine used is at least 0.01 and no greater than 1.5 weight percent. Most preferably, the amount of the (poly)alkylene polyamine additive is at least 0.05 and no greater than 1.0 weight percent based on the solids content of the slip.

A binder may also optionally be employed in the process of the present invention. The binder serves to maintain viscosity levels in slip compositions and article weight of the non-whiteware ceramic articles prepared therefrom. Non-limiting examples of materials useful as binders include latexes such as styrene -butadiene latexes, acrylic latexes, ethylene-acrylic acid latexes, lignosulfonates, polyvinyl alcohols, alkanolamines, polypropylene glycols, polyethylene glycols and other binders known in the art. The binders may be used individually or mixtures of binders may be employed.

When a binder is employed, it is employed in an amount sufficient to maintain or improve the viscosity of the slip composition and article weight relative to those characteristics in a system which is identical but without the binder. Preferably, the total amount of binder employed is at least 0.0001 and no more than 30 weight percent based on the solids content of the slip. It is more preferred that the total amount of binder employed is at least 0.01 weight percent and no more than 6.5 weight percent. Most preferably the amount of binder employed is at least 0.05 and no greater than 4.5 weight percent based on the solids content of the slip.

The (poly)alkylene polyamine and binder may be added to the slip composition separately. Alternatively, all or a portion of the binder may be mixed with the (poly)alkylene polyamine prior to addition to the slip composition. When the (poly)alkylene polyamine and all or a portion of the binder are mixed prior to addition to the slip composition, it is preferred to mix the two components by preparing separate aqueous solutions of the binder and the (poly)alkylene polyamine and adding the amine solution to the binder solution with stirring. When the binder and the (poly)alkylene polyamine are so mixed, any relative amount of (poly)alkylene polyamine mixed with binder that will result in an increase in the green strength of articles manufactured by the process of this invention while maintaining the viscosity of the slip and/or the cast weight or the non-whiteware ceramic articles is useful in the practice of this invention. Useful ratios of (poly)alkylene polyamine to binder, when so mixed, are 95:5 to 5:95 on a weight basis. It is preferred to use a weight ratio of (poly)alkylene polyamine mixed with binder of 70:30 to 30:70 and more preferred to use a weight ratio of 50:50. It is preferred that the binder mixed with the (poly)alkylene polyamine additive prior to the addition to the slip is a latex. It is more preferred that the binder mixed with the (poly)alkylene polyamine is a styrene butadiene latex.

In some applications, additional binder will be employed in the slip composition in conjunction with the (poly)alkylene polyamine/binder additive. The additional binder added may be the same as or different than the binder mixed with the (poly)alkylene polyamine prior to the addition of the mixture to the slip composition.

Manufacturing processes used to prepare the non-whiteware ceramic articles prepared using the process and composition of this invention are generally practiced as they would be in the absence of the invention. That is, temperatures, pressures, additives other than the (poly)alkylene polyamine or (poly)-alkylene polyamine/binder and overall processing methods are not changed in the practice of the current invention.

For example, the slip casting process of the present invention can be practiced using the conditions commonly employed in the art of slip casting and pressure casting. Typically, slip casting is conducted at ambient temperature, although temperatures of 5°C to 95°C can be employed if desired. Typically, pressure casting is conducted at temperatures of from about ambient temperature up to 100°C or higher. Ambient temperature is preferred from the standpoint of convenience and low cost. Casting can be conducted at superatmospheric pressure, atmospheric pressure, sub-atmospheric pressure, and combinations of these as is well-known in the casting art.

The casting process of the present invention can be practiced by introduction of the (poly)alkylene polyamine or the (poly)alkylene polyamine/binder into the slip. The (poly)alkylene polyamine and binder, if any, may be added separately or together. Typically, this introduction is made early in the process of slip preparation. The dispersant is also added early in the process of slip preparation. Preferably, the addition to the slip medium of the (poly)alkylene polyamine and, optionally, the binder occurs prior to addition of the particulate material.

The slip casting techniques employed in the process of the present invention are those which are well-known in the slip casting art. For examples of slip casting methods, see US-A-4,217,320 and US-A-4,482,388. Additionally, see GB-A-2,035,189. Similarly, the pressure casting techniques employed are those which are known in the pressure casting art. See, e.g., US-A-4,591,472 and US-A-4,659,483.

In those instances wherein the non-whiteware ceramic articles are prepared by dry pressing, the slip composition of the present invention is prepared and the solvent is removed to yield a powder of the desired consistency. The powder is placed in dies of the appropriate size and shape and subjected to elevated pressures either unilaterally in the case of conventional dry pressing or from all sides in the case of isostatic pressing. Pressures commonly used in uniaxial or isostatic pressing generally range from 1000 to 30,000 psi (7 to 200 MPa) although higher or lower pressures may be used. Pressing is typically conducted at ambient temperatures although elevated temperatures may be used.

When this invention is practiced using plastic-forming manufacturing techniques, the slip is prepared generally as it would be in the absence of the practice of this invention. The (poly)alkylene polyamine or (poly)alkylene polyamine/binder additive is added to the slip composition either separately or together. This introduction is typically made early in the process of slip preparation. Preferably, the (poly)alkylene polyamine and, optionally, the binder are added prior to the addition of the particulate material. The dispersant is also added to the slip composition early in the process of slip preparation. Once the slip is prepared, it is produced using known plastic-forming manufacturing techniques such as extrusion.

The following examples are given to illustrate the invention and should not be interpreted as limiting it in any way. Unless stated otherwise, all parts and percentages are given by weight. The procedures described below for slip preparation, casting properties testing and green strength testing were followed in Examples 1-3.

## Slip Preparation

A 16-ounce (470 $cm^3$) polyethylene bottle containing 10 alumina mixing balls is placed on a top -loading balance and tared. To this bottle are added quantities of the following additives corresponding to their active concentration in the final slip as indicated or shown in Tables I and II: magnesium carbonate ($4MgCO_3 \cdot Mg(OH)_2 \cdot 4H_2O$) 1076 ppm, polyacrylate dispersant (25 percent solution) 1430 ppm, additive solution (50 percent aqueous), and citric acid (as the monohydrate) 1780 ppm. Deionized water is then added until the bottle contains the appropriate quantity of water plus additives (168.8 g total of water plus additives, 21.9 weight percent of total slip). The bottle is removed from the balance, capped and vigorously shaken by hand. Next, 631.2 g of Type A-17 alumina or ceramic grade zirconia is added and the bottle is capped and shaken vigorously until the contents appear uniformly mixed. Any powder that cakes on either the sides or top of the bottle is loosened with a spatula and the bottle is shaken further. The bottle is placed on its side in a mechanical shaker (side to side action) after all ingredients are added and moistened (total

800 g). The bottle is allowed to shake for 2.5 hours at high speed. The slip is 21.1 percent water and water-soluble additives and the remaining 78.9 percent is alumina or zirconia.

Casting Properties Testing

Next, the bottle is removed from the shaker and a portion of the slip is poured into a 4-ounce (120 $cm^3$) wide-mouth bottle. The viscosity of the slip is determined using a Brookfield Viscometer (Model LV, spindle 3, RPM 12, 35 °C). The spindle is allowed to rotate a full minute before the reading is taken. A shallow, open plaster of paris mold is used in this test. Slip from the bottles is poured quickly into the mold until the depression is completely full and the slip wells up above the confines of the mold. The slip is allowed to remain in the mold for two minutes and then the mold is tilted and the excess slip is allowed to drain. When the slip draining out of the mold changes from a solid stream to a series of drops at five-second intervals, the mold is returned to the horizontal and replaced on the bench. When the surface of the cast article is no longer glossy, it is removed from the mold after removing any excess that results from the pouring. The cast article is weighed to determine the cast weight.

Green Strength Testing

A portion of the slip not used as described above is poured into a two-part plaster of Paris bar mold and is allowed to cast. This bar mold produces ceramic bars which are 0.5 inch x 0.5 inch x 3.0 inches (1.3 cm x 1.3 cm x 7.5 cm). When the casting has proceeded sufficiently, the bars are demolded and allowed to dry overnight. Next, the bars are conditioned for six hours at 60 °C followed by 24 hours in an oven at 110 °C. When the bars are removed from the oven, they are placed in a desiccator to cool. Twenty-four hours prior to testing, half of the bars are transferred to a constant humidity chamber (50 percent relative humidity - saturated sodium dichromate solution) while the others are left in the desiccator. Modulus of rupture testing is accomplished using an Instron device (Model 1125) with the following setting: 1000-lb load (450 kg) cell, full scale load set to 50 lb, (23 kg) crosshead speed 0.05 in. per minute (0.13 cm/min), and support knives spaced at 1.5 inches (3.8 cm). The modulus of rupture for both the anhydrous and 50 percent relative humidity bars is calculated by the standard equation given in ASTM Standard C 689-80.

Examples 1-2 - Effect of Additive on Green Strength in Slip Casting Processes Using Alumina Based Slip

Example 1

The procedures specified above are followed using a slip formulation comprising 1000 ppm additive, 78.9 percent alumina, and the other components described above. The identity of the additive is varied in each case. The results obtained are shown in Table I below.

TABLE I

| Additive | Viscosity [cps]* | Cast Weight [g] | Anhydrous MOR① [psi] (kPa) | 50% Humidity MOR① [psi] (kPa) |
|---|---|---|---|---|
| None② | 2033 | 226 | 23 (159) | 25 (172) |
| EDA③ | 100 | 56 | 57 (393) | 44 (303) |
| TEPA④ | 150 | 101 | 67 (462) | 37 (255) |
| TEPA/SB Latex⑤ | 900 | 192 | 55 (379) | 34 (234) |

① Modulus of rupture

② Not an example of this invention

③ ethylenediamine

④ tetraethylenepentamine

⑤ 50:50 wt basis tetraethylenepentamine/styrene--butadiene latex

* 1 cps = 1 mPa.s

The data presented above shows that the (poly)alkylene polyamine additives of this invention are effective in increasing the green strength of articles cast from an alumina slip formulation which in the absence of the additive exhibits a low green strength. In each case, the addition of polyalkylene polyamine additives results in improved green strength of the cast article. When the (poly)alkylene polyamine is mixed with a latex binder, the improvement in green strength is also observed and, in addition, viscosity and cast weight are maintained.

Example 2

The slip formulation described in Example 1 is used in this example. The additive used is a 50:50 blend of tetraethylenepentamine and styrene-butadiene latex. The effect of different additive levels is measured and the results obtained are shown in Table II below.

TABLE II

| Additive Level (ppm) | Viscosity [cps]* | Cast Weight [g] | Anhydrous MOR① [psi] (kPa) | 50% Humidity MOR① [psi] (kPa) |
|---|---|---|---|---|
| 0② | 2033 | 226 | 23 (159) | 25 (172) |
| 500 | 3850 | 214 | 49 (338) | 25 (172) |
| 1000 | 900 | 192 | 55 (379) | 34 (234) |
| 1500 | 1683 | 207 | 30 (207) | 25 (172) |
| 2000 | 316 | 135 | 50 (345) | 39 (269) |

① Modulus of rupture

② Not an example of this invention

* 1 cps = 1 mPa.s

The data above shows the effect of different levels of a 50:50 blend of tetraethylenepentamine and styrene-butadiene latex on the green strength and cast weight of the cast article. While some improvement in green strength is noted at each dosage level in the case of the anhydrous modulus of rupture, it can be seen that dosage levels of about 1000 ppm result in both a maintained cast article weight and improved green strength both under anhydrous conditions and under 50 percent relative humidity.

Example 3 - Effect of Additive on Green Strength in Slip Casting Processes Using Zirconia Based Slip

The procedure outlined above is followed using zirconia as the particulate in the slip composition and the additives at a level of 1000 ppm specified in Table III below.

TABLE III

| Additive | Viscosity [cps] | Cast Weight [g] | Anhydrous MOR[1] [psi] (kPa) | 50% Humidity MOR[1] [psi] (kPa) |
|---|---|---|---|---|
| None[2] | 3925 | 345.1 | 7.42 (51.16) | 5.24 (36.13) |
| EDA[3] | 4350 | 342.8 | 10.94 (75.43) | 3.27 (22.55) |
| TEPA[4] | 5100 | 318.0 | 18.27 (125.97) | 6.10 (42.06) |
| TEPA/SB Latex[5] | 5250 | 336.0 | 11.31 (77.98) | 5.62 (38.75) |

[1] Modulus of rupture

[2] Not an example of this invention

[3] ethylenediamine

[4] tetraethylenepentamine

[5] 50:50 wt basis tetraethylenepentamine/styrene--butadiene latex

* 1 cps = 1 mPa.s

The information in Table III above demonstrates that the additives of this invention are effective in increasing the green strength of non-whiteware ceramic articles prepared using a zirconia slip composition processed by slip casting. The information also demonstrates that cast weight and slip viscosity are also maintained with or without the addition of the latex with the (poly)ethylene polyamine additive.

Examples 4-8 and Comparative Examples C-1 and C-2

Effect of Additive on Strength of Pressed Articles

To a pint (470 $cm^3$) polyethylene bottle containing 5 alumina milling balls is added 600 g of alumina, 300 g, less the grams of binder added, of deionised water, 6 g of ammonium lignosulfonate dispersant, the (poly)ethylene polyamine additive and a high molecular weight polyethylene glycol in the amounts indicated in Table IV. This slip composition is milled 30 minutes and poured into a flat dish. It is then dried for 24 hours at about 50 °C. The dried cakes are removed from the dish and ground with a mortar and pestle and then screened through a 60 mesh (250 micrometers) screen.

The screened powders are pressed into 20-gram pellets using a hydraulic press with pressure of 5000 psi (34.5 MPa) applied for 30 seconds. Oleic acid is used as a die lubricant. Prior to compressive strength testing, the test specimens are conditioned for 24 hours at 50 percent relative humidity. An Instron model TTC is equipped with a 10,000-lb (4500 kg) load cell and flat compression plates. The full scale load is set to 2000 lb (910 kg) and a crosshead speed of 0.02 inch per minute (0.05 cm/min) is used for the test. Specimens are placed flat side down on the lower plate. The maximum load at failure is recorded and the following equation is used to calculate compressive strength:

$$C = P / A$$

where C is the compressive strength in psi; P is the load at failure in pounds; and A is the area of bearing surface of the specimen tested in square inches. For each example, five specimens were tested and the average was taken and is reported in Table IV below. In some of the examples, the average was of less than five specimens due to delamination of some of the test specimens prior to testing of compressive

strength.

### TABLE IV

| Example | Additive Concentration[1] [wt %][2] | Binder Concentration [wt %][2] | Compressive Strength[3] [psi] (MPa) |
|---|---|---|---|
| C-1 | none | none | 515[4] (3.55) |
| 4 | 0.25 | none | 610 (4.21) |
| 5 | 0.50 | none | 739[5] (5.10) |
| 6 | 1.00 | none | 831 (5.73) |
| C-2 | none | 4.0 | 930 (6.41) |
| 7 | 0.50 | 4.0 | 1266 (8.73) |
| 8 | 1.00 | 4.0 | 1073 (7.40) |

[1] In each instance the additive is tetraethylenepentamine

[2] Weight percent based on weight of alumina in slip

[3] Average of five measurements

[4] Average is of only two measurements due to delamination of three of the specimens

[5] Average is of only four specimens due to breaking of one specimen prior to testing

The data in the above table demonstrate that the (poly)ethylene polyamine additives of this invention are useful in increasing the green strength of non-whiteware ceramic articles prepared by cold pressing. Further, Examples 4-6 demonstrate the effect of different additive levels. Examples 7 and 8 demonstrate that the additive of this invention used in conjunction with conventional binders results in enhanced green strengths.

Examples 9-44 and Comparative Examples C-3 to C-7 Slip Preparation

To a pint (470 $cm^3$) polyethylene bottle containing 5 alumina balls are added 3.20 g of a 25 percent solution of a polyacrylate dispersant and 160 g of deionized water. The mixture is thoroughly mixed and then 400 g of alumina is added. When all the powder is thoroughly wetted, the bottle is capped and placed in a mechanical shaker for 30 minutes. At this point, binder in a 30 percent aqueous solution and additive in a 50 percent aqueous solution are added in the amounts indicated in Table V below. The bottle is again capped and returned to the mechanical shaker for an additional two hours. At the end of the two hours, the slip is poured through a 100 mesh (149 micrometers) sieve into a glass baking dish which is placed in a 50°C oven for 24 hours. At the end of the 24 hours, the material is allowed to cool and is broken up, pulverized with a mortar and pestle and passed through a 60 mesh (250 micrometers) sieve.

Compressive Strength and Green Density Testing

Portions of the prepared powder (15 g) are pressed into cylindrical pellets of approximately 1.25 inches (3.2 cm) in diameter and 0.5 inch (1.3 cm) in height. The mass, diameter and thickness is precisely determined for each pellet. Then each pellet is diametrally loaded using an Instron (Model 1102) testing machine with the following setting: 1000-pound (450 kg) load cell, full scale load set to 20 pounds (9.1 kg),

crosshead speed at 0.2 inch per minute (0.5 cm/min). The load at failure is recorded and the green density is calculated as the mass of the pellet divided by the volume of the pellet. The compressive strength is calculated as the load at failure divided by the area of the bearing surface of the test specimen.

Examples 9-15 and C-3 -Effect of Additive Identity

The procedures described above are followed. No binder is used and the identity of the (poly)ethylene polyamine additive is varied in each example. The amount of additive used in each case is 1 weight percent based on the weight of the alumina. The results obtained are shown in Table V below.

TABLE V

| Example | Additive | Green Density [g/cm$^3$] | Compressive Strength [psi] (kPa) |
|---|---|---|---|
| C-3 | none | 2.23 | 13.68 (94.32) |
| 9 | EDA① | 2.21 | 19.85 (136.87) |
| 10 | DETA② | 2.26 | 43.86 (302.41) |
| 11 | TETA③ | 2.30 | 41.48 (286.00) |
| 12 | TEPA④ | 2.30 | 40.25 (277.52) |
| 13 | E-100⑤ | 2.30 | 33.61 (231.74) |
| 14 | Pip⑥ | 2.29 | 29.53 (203.61) |
| 15 | PA/SB⑦ | 2.23 | 32.43 (223.60) |

① ethylenediamine

② diethylenetriamine

③ triethylenetetramine

④ tetraethylenepentamine

⑤ mixture of ethylene polyamines commercially available from The Dow Chemical Company

⑥ piperazine

⑦ 50/500 weight blend of tetraethylenepentamine and styrene butadiene latex

The data in Table V demonstrate that alumina slips containing the (poly)ethylene polyamine additives of this invention are generally effective in increasing the compressive strength and green density of articles prepared by pressing. The effect on green density is small and, in the case of ethylenediamine, is negative. However, in each example the compressive strength of the green ceramic article is increased significantly.

Examples 16-49 and C-4 to C-7

Effect of Binder Amount and Identity

The procedures outlined above are followed. In these examples different binders are used in addition to the (poly)ethylene polyamine additives. The results obtained are shown in Table VI below.

TABLE VI

| Example | Additive Identity | Additive Amount [wt %]① | Binder Identity | Binder Amount [wt %]① | Green Density [g/cm³] | Compressive Strength [psi] (kPa) |
|---|---|---|---|---|---|---|
| C-4 | none | - | PEG⑨ | 4.0 | 2.23 | 65.61 (452.38) |
| 16 | EDA② | 0.5 | PEG⑨ | 4.0 | 2.27 | 46.27 (319.03) |
| 17 | DETA③ | 0.5 | PEG⑨ | 4.0 | 2.30 | 52.26 (360.33) |
| 18 | TETA④ | 0.5 | PEG⑨ | 4.0 | 2.31 | 49.94 (344.34) |
| 19 | TEPA⑤ | 0.5 | PEG⑨ | 4.0 | 2.28 | 94.58 (652.13) |
| 20 | E-100⑥ | 0.5 | PEG⑨ | 4.0 | 2.28 | 75.38 (519.75) |
| 21 | Pip⑦ | 0.5 | PEG⑨ | 4.0 | 2.28 | 62.75 (432.66) |
| 22 | PA/SB⑧ | 0.5 | PEG⑨ | 4.0 | 2.27 | 63.41 (437.21) |
| 23 | EDA② | 1.0 | PEG⑨ | 4.0 | 2.28 | 45.31 (312.41) |
| 24 | DETA③ | 1.0 | PEG⑨ | 4.0 | 2.29 | 47.30 (326.13) |
| 25 | TETA④ | 1.0 | PEG⑨ | 4.0 | 2.32 | 89.57 (617.59) |
| 26 | TEPA⑤ | 1.0 | PEG⑨ | 4.0 | 2.29 | 139.55 (962.20) |
| 27 | E-100⑥ | 1.0 | PEG⑨ | 4.0 | 2.32 | 58.12 (400.74) |
| 28 | Pip⑦ | 1.0 | PEG⑨ | 4.0 | 2.27 | 56.48 (389.43) |
| 29 | PA/SB⑧ | 1.0 | PEG⑨ | 4.0 | 2.29 | 84.27 (581.04) |
| C-5 | none | - | PEG⑨ | 1.0 | 2.22 | 13.93 (96.05) |
| 30 | EDA② | 1.0 | PEG⑨ | 1.0 | 2.23 | 18.82 (129.76) |
| 31 | DETA③ | 1.0 | PEG⑨ | 1.0 | 2.25 | 25.92 (178.72) |
| 32 | TETA④ | 1.0 | PEG⑨ | 1.0 | 2.28 | 68.07 (469.34) |
| 33 | TEPA⑤ | 1.0 | PEG⑨ | 1.0 | 2.32 | 54.85 (378.19) |
| 34 | E-100⑥ | 1.0 | PEG⑨ | 1.0 | 2.28 | 42.28 (291.52) |
| 35 | Pip⑦ | 1.0 | PEG⑨ | 1.0 | 2.26 | 29.19 (201.27) |
| 36 | PA/SB⑧ | 1.0 | PEG⑨ | 4.0 | 2.26 | 43.76 (301.73) |

TABLE VI (cont'd)

| Example | Additive Identity | Additive Amount [wt %]① | Binder Identity | Binder Amount [wt %]① | Green Density [g/cm³] | Compressive Strength [psi] (kPa) |
|---|---|---|---|---|---|---|
| C-6 | none | - | SB 1a⑩ | 1.00 | 2.19 | 55.36 (381.71) |
| 37 | EDA② | 1.0 | SB 1a⑩ | 1.00 | 2.19 | 53.80 (370.95) |
| 38 | DETA③ | 1.0 | SB 1a⑩ | 1.00 | 2.20 | 60.64 (418.11) |
| 39 | TETA④ | 1.0 | SB 1a⑩ | 1.00 | 2.22 | 60.81 (419.28) |
| 40 | TEPA⑤ | 1.0 | SB 1a⑩ | 1.00 | 2.26 | 57.10 (393.70) |
| 41 | E-100⑥ | 1.0 | SB 1a⑩ | 1.00 | 2.22 | 58.76 (405.15) |
| 42 | Pip⑦ | 1.0 | SB 1a⑩ | 1.00 | 2.19 | 65.05 (448.52) |
| 43 | PA/SB⑧ | 1.0 | SB 1a⑩ | 0.67 | 2.22 | 61.43 (423.56) |
| C-7 | none | - | PVA* | 1.0 | 2.21 | 38.35 (264.42) |
| 44 | EDA② | 1.0 | PVA* | 1.0 | 2.21 | 45.16 (311.38) |
| 45 | DETA③ | 1.0 | PVA* | 1.0 | 2.23 | 76.01 (524.09) |
| 46 | TETA④ | 1.0 | PVA* | 1.0 | 2.25 | 106.52 (734.46) |
| 47 | TEPA⑤ | 1.0 | PVA* | 1.0 | 2.25 | 88.36 (609.24) |
| 48 | E-100⑥ | 1.0 | PVA* | 1.0 | 2.27 | 68.18 (470.10) |
| 49 | Pip⑦ | 1.0 | PVA* | 1.0 | 2.24 | 51.69 (356.40) |
| 50 | PA/SB⑧ | 1.0 | PVA* | 1.0 | 2.23 | 67.12 (462.79) |

① Weight percent based on weight of alumina in slip
② Ethylenediamine
③ Diethylenetriamine
④ Triethylenetetramine
⑤ Tetraethylenepentamine
⑥ A blend of polyalkylene polyamines having average molecular weights less than about 800 and greater than about 150
⑦ Piperazine
⑧ 50/50 weight blend of tetraethylenepentamine and styrene butadiene latex
⑨ High molecular weight polyethylene glycol
⑩ Styrene-butadiene latex
* Polyvinyl alcohol

The data shown above demonstrate the effect of the (poly)ethylene polyamine additives of this invention when used in conjunction with different binders useful in the pressing of non-whiteware ceramic articles. Examples 16-22 and 23-29 demonstrate that the use of 0.5 weight percent or 1.0 weight percent of the (poly)ethylene polyamine additive with 4.0 weight percent of a high molecular weight polyethylene glycol results in increased green density no matter what the identity of the (poly)ethylene polyamine. These

examples also demonstrate that compressive strength is increased by the use of higher molecular weight (poly)ethylene polyamines.

Examples 30-36 demonstrate that the use of 1.0 weight percent of the (poly)ethylene polyamine additives of this invention used with 1.0 weight percent of a (poly)ethylene glycol binder is effective to increase both the green density and compressive strength of non -whiteware ceramic articles no matter what the identity of the (poly)ethylene polyamine additive.

Examples 37-43 show that the use of 1.0 weight percent of the (poly)ethylene polyamine additives of this invention used with 1.0 weight percent of a butadiene -styrene latex binder maintains or increases the green density of dry pressed alumina non-whiteware ceramic articles. These examples also demonstrate that the use of higher molecular weight (poly)ethylene polyamine additives is more effective in increasing the compressive strength of dry pressed alumina ceramic articles.

Examples 44-50 demonstrate that the use of 1.0 weight percent of the (poly)ethylene polyamine additives of this invention used with 1.0 weight percent of a polyvinyl alcohol binder is effective to increase both the green density and compressive strength of non -whiteware ceramic articles no matter what the identity of the (poly)ethylene polyamine additive.

Examples 51-56 and Comparative Examples C-8 to C-10

Effect of Different Particulate Materials

The procedure outlined for Examples 9-50 is followed with the exception that the nature of the particulate material is varied as is shown in Table VII below. When the powder used is silicon nitride, ethanol is substituted for the deionised water. One weight percent based on the solids content of the slip of additive is used in each of Examples 51-56. Four weight percent of a high molecular weight polyethylene glycol is used as binder in each of the examples. The results obtained are listed in Table VII below.

TABLE VII

| Example | Powder Identity | Additive Identity | Green Density [g/cm$^3$] | Compressive Strength [psi] (kPa) |
|---|---|---|---|---|
| C-8 | zirconia | none | 3.12 | 13.78 (95.01) |
| 51 | zirconia | TEPA | 3.33 | 30.33 (209.13) |
| 52 | zirconia | PA/SB | 3.25 | 51.88 (357.71) |
| C-9 | silicon carbide | none | 1.87 | 65.09 (448.80) |
| 53 | silicon carbide | TEPA | 1.86 | 84.57 (583.11) |
| 54 | silicon carbide | PA/SB | 1.85 | 88.74 (611.86) |
| C-10 | silicon nitride | none | 1.74 | 34.79 (239.88) |
| 55 | silicon nitride | TEPA | 1.78 | 46.81 (322.75) |
| 56 | silicon nitride | PA/SB | 1.78 | 50.04 (345.03) |

The data in Examples 51-56 shows, when compared to Comparative Examples C-8 to C-10 that the (poly)-ethylene polyamine additives of this invention are effective in increasing the compressive strength of non-whiteware ceramic articles prepared by dry pressing techniques when various ceramic powders are used in the slip composition.

**Claims**

**Claims for the following Contracting States : CH, FR, GB, IT, LI, NL, SE**

**1.** A process for preparing non-whiteware ceramic articles from a flowers of sulfur-free slip composition comprising a slip medium and a ceramic particulate material, characterised in that the slip composition includes a (poly)alkylene polyamine in an amount effective to increase the green strength of articles prepared from the slip composition.

**2.** A process as claimed in Claim 1, wherein the (poly)alkylene polyamine has an average molecular weight of less than 1,000.

**3.** A process as claimed in Claim 2, wherein the (poly)alkylene polyamine has the formula:

$$H_2N \left[ (CH_2)_n-(CH_2-CH_2-NH)_m \right]_p H$$

wherein n is 0 to 6, m is 1 to 6 and p is 1 to 15 with the proviso that n and m can vary independently within a molecule from one repeating unit to the next.

**4.** A process as claimed in Claim 3, wherein n is 0, p is 1 and m is 3 to 6.

**5.** A process as claimed in Claim 3 or Claim 4, wherein the (poly)alkylene polyamine is an ethylene polyamine having an average molecular weight greater than 150 and less than 800.

**6.** A process as claimed in Claim 5, wherein the (poly)alkylene polyamine is tetraethylenepentamine.

**7.** A process as claimed in any one of the preceding claims, wherein the (poly)alkylene polyamine is present in an amount of at least 0.01 and no greater than 1.5 weight percent based on the total solids content of the slip composition.

**8.** A process as claimed in any one of the preceding claims, wherein the slip comprises a binder in an amount effective to maintain viscosity of the slip and cast weight of non-whiteware ceramic articles prepared therefrom.

**9.** A process as claimed in Claim 8, wherein said binder is a latex.

**10.** A process as claimed in Claim 9, wherein said latex is a styrene butadiene latex.

**11.** A process as claimed in any one of Claims 8 to 10, wherein said binder is present in an amount of at least 0.01 and no greater than 6.5 weight percent based on the total solids content of the slip composition.

**12.** A process as claimed in any one of Claims 8 to 11, wherein the weight ratio of (poly)alkylene polyamine to binder is at least 30:70 and no greater than 70:30.

**13.** A process as claimed in any one of the preceding claims, wherein the (poly)alkylene polyamine optionally in admixture with at least part of the binder, if present, was been added to the slip medium before the particulate material.

**14.** A process as claimed in any one of the preceding claims, wherein the particulate material is selected from alumina, aluminum nitride, zirconium oxide, yttrium oxide, spinel, silicon carbide, silicon nitride, titanium dioxide, iron oxide, calcium oxide, boron carbide, boron nitride and mixtures thereof.

**15.** A process as claimed in Claim 14, wherein the particulate material is selected from alumina, zirconium oxide, silicon carbide, silicon nitride and mixtures thereof.

**16.** The use of a (poly)alkylene polyamine as a green strength additive in the manufacture of non-whiteware ceramic articles from a slip composition.

**17.** A use as claimed in Claim 16, wherein the (poly)alkylene polyamine is as defined in any one of Claims 2 to 6.

**18.** A slip composition for making a non-whiteware ceramic article, comprising:
(1) a slip medium;
(2) a particulate material;
(3) a (poly)alkylene polyamine in an amount effective to increase green strength of non-whiteware ceramic articles prepared from said slip composition,

said slip composition being free of clay, aluminosilicate, silica, frit and flowers of sulfur.

19. A slip composition as claimed in Claim 18, wherein the (poly)alkylene polyamine is as defined in any one of Claims 2 to 6.

20. A slip composition as claimed in Claim 18 or Claim 19, wherein the composition is as defined in any one of Claims 7 to 13.

21. A slip composition as claimed in Claim 18 to 20, wherein the particulate material is as defined in Claim 14 or Claim 15.

**Claims for the following Contracting State : ES**

1. A process for preparing non-whiteware ceramic articles from a flowers of sulfur-free slip composition comprising a slip medium and a ceramic particulate material, characterised in that the slip composition includes a (poly)alkylene polyamine in an amount effective to increase the green strength of articles prepared from the slip composition.

2. A process as claimed in Claim 1, wherein the (poly)alkylene polyamine has an average molecular weight of less than 1,000.

3. A process as claimed in Claim 2, wherein the (poly)alkylene polyamine has the formula:

$$H_2N - [ (CH_2)_n - (CH_2-CH_2-NH)_m ]_p - H$$

wherein n is 0 to 6, m is 1 to 6 and p is 1 to 15 with the proviso that n and m can vary independently within a molecule from one repeating unit to the next.

4. A process as claimed in Claim 3, wherein n is 0, p is 1 and m is 3 to 6.

5. A process as claimed in Claim 3 or Claim 4, wherein the (poly)alkylene polyamine is an ethylene polyamine having an average molecular weight greater than 150 and less than 800.

6. A process as claimed in Claim 5, wherein the (poly)alkylene polyamine is tetraethylenepentamine.

7. A process as claimed in any one of the preceding claims, wherein the (poly)alkylene polyamine is present in an amount of at least 0.01 and no greater than 1.5 weight percent based on the total solids content of the slip composition.

8. A process as claimed in any one of the preceding claims, wherein the slip comprises a binder in an amount effective to maintain viscosity of the slip and cast weight of non-whiteware ceramic articles prepared therefrom.

9. A process as claimed in Claim 8, wherein said binder is a latex.

10. A process as claimed in Claim 9, wherein said latex is a styrene butadiene latex.

11. A process as claimed in any one of Claims 8 to 10, wherein said binder is present in an amount of at least 0.01 and no greater than 6.5 weight percent based on the total solids content of the slip composition.

12. A process as claimed in any one of Claims 8 to 11, wherein the weight ratio of (poly)alkylene polyamine to binder is at least 30:70 and no greater than 70:30.

**13.** A process as claimed in any one of the preceding claims, wherein the (poly)alkylene polyamine optionally in admixture with at least part of the binder, if present, was been added to the slip medium before the particulate material.

**14.** A process as claimed in any one of the preceding claims, wherein the particulate material is selected from alumina, aluminum nitride, zirconium oxide, mullite, silica, yttrium oxide, spinel, silicon carbide, silicon nitride, titanium dioxide, iron oxide, calcium oxide, boron carbide, boron nitride and mixtures thereof.

**15.** A process as claimed in Claim 14, wherein the particulate material is selected from alumina, zirconium oxide, silicon carbide, silicon nitride and mixtures thereof.

**16.** The use of a (poly)alkylene polyamine as a green strength additive in the manufacture of non-whiteware ceramic articles from a slip composition.

**17.** A use as claimed in Claim 16, wherein the (poly)alkylene polyamine is as defined in any one of Claims 2 to 6.

**18.** A slip composition for making a non-whiteware ceramic article, comprising:
(1) a slip medium;
(2) a particulate material;
(3) a (poly)alkylene polyamine in an amount effective to increase green strength of non-whiteware ceramic articles prepared from said slip composition,
said slip composition being free of frit and flowers of sulfur.

**19.** A slip composition as claimed in Claim 18, wherein the (poly)alkylene polyamine is as defined in any one of Claims 2 to 6.

**20.** A slip composition as claimed in Claim 18 or Claim 19, wherein the composition is as defined in any one of Claims 7 to 13.

**21.** A slip composition as claimed in Claim 18 to 20, wherein the particulate material is as defined in Claim 14 or Claim 15.

## Patentansprüche

## Patentansprüche für folgende Vertragsstaaten : CH, FR, GB, IT, LI, NL, SE

**1.** Verfahren zur Herstellung keramischer Erzeugnisse, die nicht Porzellan und Steingut sind, aus einer Schwefelblumenfreien Schlicker-Zusammensetzung, welche ein Schlickermedium und ein keramisches disperses Material umfaßt, dadurch gekennzeichnet, daß die Schlicker-Zusammensetzung ein (Poly)-Alkylen-Polyamin in einer Menge enthält, die zur Erhöhung der Grünfestigkeit von aus der Schlicker-Zusammensetzung hergestellten Erzeugnisse wirksam ist.

**2.** Verfahren nach Anspruch 1, bei dem das (Poly)Alkylen-Polyamin ein durchschnittliches Molekulargewicht von kleiner als 1000 besitzt.

**3.** Verfahren nach Anspruch 2, bei dem das (Poly)Alkylen-Polyamin die Formel aufweist:

$$H_2N\text{-}[\text{-}(CH_2)_n\text{-}(CH_2\text{-}CH_2\text{-}NH)_m\text{-}]_p\text{-}H$$

bei der n 0 bis 6 ist, m 1 bis 6 ist und p 1 bis 15 ist, unter der Voraussetzung, daß sich n und m innerhalb eines Moleküls von einer sich wiederholenden Einheit zur nächsten unabhängig ändern können.

**4.** Verfahren nach Anspruch 3, bei dem n 0, p 1 und m 3 bis 6 ist.

**5.** Verfahren nach Anspruch 3 oder Anspruch 4, bei dem das (Poly)Alkylen-Polyamin ein Ethylenpolyamin mit einem durchschnittlichen Molekulargewicht von größer als 150 und kleiner als 800 ist.

**6.** Verfahren nach Anspruch 5, bei dem das (Poly)Alkylen-Polyamin Tetraethylenpentamin ist.

**7.** Verfahren nach einem der vorhergehenden Ansprüche, bei dem das (Poly)Alkylen-Polyamin in einer Menge von wenigstens 0,01 und nicht mehr als 1,5 Gew.-% vorhanden ist, bezogen auf den Gesamt-Feststoffgehalt der Schlicker-Zusammensetzung.

**8.** Verfahren nach einem der vorhergehenden Ansprüche, bei dem der Schlicker ein Bindemittel in einer Menge entält, die wirksam ist die Viskosität des Schlickers und das Gußgewicht von daraus hergestellten keramischen Erzeugnissen, die nicht aus Porzellan und Steingt sind, aufrecht zu erhalten.

**9.** Verfahren nach Anspruch 8, bei dem das Bindemittel Latex ist.

**10.** Verfahren nach Anspruch 9, bei dem das Latex ein Styrol-Butadienlatex ist.

**11.** Verfahren nach einem der Ansprüche 8 bis 10, bei dem das Bindemittel in einer Menge von wenigstens 0,01 und nicht mehr als 6,5 Gew.-% vorhanden ist, bezogen auf den Gesamt-Feststoffgehalt der Schlicker-Zusammensetzung.

**12.** Verfahren nach einem der Ansprüche 8 bis 11, bei dem das Gewichtsverhältnis von (Poly)Alkylen-Polyamin zu Bindemittel wenigstens 30:70 und nicht mehr als 70:30 ist.

**13.** Verfahren nach einem der vorhergehenden Ansprüche, bei dem das (Poly)Alkylen-Polyamin, wahlweise im Gemisch mit Wenigstens einem Teil des Bindemittels, wenn vorhanden, der Schlicker-Zusammensetzung vor dem dispersen Material zugegeben wird.

**14.** Verfahren nach einem der vorhergehenden Ansprüche, bei dem das disperse Material ausgewählt wird aus Aluminiumoxid, Aluminiumnitrid, Zirkonoxid, Yttriumoxid, Spinell, Sliziumcarbid, Siliziumnitrid, Titandioxid, Eisenoxid, Calciumoxid, Borcarbid, Bornitrid und Gemischen davon.

**15.** Verfahren nach Anspruch 14, bei dem das disperse Material ausgewählt ist aus Aluminiumoxid, Zirkonoxid, Siliziumcarbid, Siliziumnitrid und Gemischen davon.

**16.** Verwendung eines (Poly)Alkylen-Polyamins als Grünfestigkeits-Additiv bei der Herstellung von keramischen Erzeugnissen, die nicht Porzellan und Steingut sind, aus einer Schlicker-Zusammensetzung.

**17.** Verwendung nach Anspruch 16, bei der das, (Poly)Alkylen-Polyamin wie in einem der Ansprüche 2 bis 6 definiert ist.

**18.** Schlicker-Zusammensetzung zur Herstellung keramischer Erzeugnisse, die nicht Porzellan und Steingut sind, welche umfaßt:

(1) ein Schlicker-Medium;
(2) ein disperses Material;
(3) ein (Poly)Alkylen-Polyamin in einer Menge, die zur Erhöhung der Grünfestigkeit von aus der Schlicker-Zusammensetzung hergestellten keramischen Erzeugnissen, die nicht Porzellan und Steingut sind, wirksam ist,

wobei die Schlicker-Zusammensetzung kein Ton, Aluminiumsilikat, Siliziumdioxid, Glassatz und Schwefelblumen enthält.

**19.** Schlicker-Zusammensetzung nach Anspruch 18, bei der das (Poly)Alkylen-Polyamin wie in einem der Ansprüche 2 bis 6 definiert ist.

**20.** Schlicker-Zusammensetzung nach Anspruch 18 oder Anspruch 19, bei der die Zusammensetzung wie in einem der Ansprüche 7 bis 13 definiert ist.

**21.** Schlicker-Zusammensetzung nach einem der Ansprüche 18 bis 20, bei der das disperse Material wie in Anspruch 14 oder Anspruch 15 definiert ist.

**Patentansprüche für folgenden Vertragsstaat : ES**

1. Verfahren zur Herstellung keramischer Erzeugnisse, die nicht Porzellan und Steingut sind, aus einer Schwefelblumenfreien Schlicker-Zusammensetzung, die ein Schlickermedium und ein keramisches disperses Material umfaßt, dadurch gekennzeichnet, daß die Schlicker-Zusammensetzung ein (Poly)-Alkylen-Polyamin in einer Menge enthält, die zur Erhöhung der Grünfestigkeit von aus der Schlicker-Zusammensetzung hergestellten Erzeugnissen wirksam ist.

2. Verfahren nach Anspruch 1, bei dem das (Poly)Alkylen-Polyamin ein durchschnittliches Molekulargewicht von weniger als 1000 besitzt.

3. Verfahren nach Anspruch 2, bei dem das (Poly)Alkylen-Polyamin die Formel:

   $H_2N$-[-$(CH_2)_n$-$(CH_2$-$CH_2$-$NH)_m$-$]_p$-H

   aufweist, bei der n 0 bis 6 ist, m 1 bis 6 ist und p 1 bis 15 ist, unter der Voraussetzung, daß sich n und m innerhalb eines Moleküls von einer sich wiederholenden Einheit zur nächsten unabhängig ändern können.

4. Verfahren nach Anspruch 3, bei dem n 0, p 1 und m 3 bis 6 ist.

5. Verfahren nach Anspruch 3 oder Anspruch 4, bei dem das (Poly)Alkylen-Polyamin ein Ethylenpolyamin mit einem durchschnittlichen Molekulargewicht von größer als 150 und kleiner als 800 ist.

6. Verfahren nach Anspruch 5, bei dem das (Poly)Alkylen-Polyamin Tetraethylenpentamin ist.

7. Verfahren nach einem der vorhergehenden Ansprüche, bei dem das (Poly)Alkylen-Polyamin in einer Menge von wenigstens 0,01 und nicht mehr als 1,5 Gew.-% vorhanden ist, bezogen auf den Gesamt-Feststoffgehalt der Schlicker-Zusammensetzung.

8. Verfahren nach einem der vorhergehenden Ansprüche, bei dem der Schlicker ein Bindemittel in einer Menge enthält, die wirksam ist, die Viskosität des Schlickers und das Gußgewicht von daraus hergestellten keramischen Erzeugnissen, die nicht Porzellan und Steingut sind, aufrecht zu erhalten.

9. Verfahren nach Anspruch 8, bei dem das Bindemittel ein Latex ist.

10. Verfahren nach Anspruch 9, bei dem das Latex ein Styrol-Butadienlatex ist.

11. Verfahren nach einem der Ansprüche 8 bis 10, bei dem das Bindemittel in einer Menge von wenigstens 0,01 und nicht mehr als 6,5 Gew.-% vorhanden ist, bezogen auf den Gesamt-Feststoffgehalt der Schlicker-Zusammensetzung.

12. Verfahren nach einem der Ansprüche 8 bis 11, bei dem das Gewichtsverhältnis von (Poly)Alkylen-Polyamin zu Bindemittel wenigstens 30:70 und nicht mehr als 70:30 ist.

13. Verfahren nach einem der vorhergehenden Ansprüche, bei dem das (Poly)Alkylen-Polyamin, wahlweise im Gemisch mit wenigstens einem Teil des Bindemittels, wenn vorhanden, der Schlicker-Zusammensetzung vor dem dispersen Material zugegeben wird.

14. Verfahren nach einem der vorhergehenden Ansprüche, bei dem das disperse Material ausgewählt ist aus Aluminiumoxid, Aluminiumnitrid, Zirkonoxid, Mullit, Silziumoxid, Yttriumoxid, Spinell, Sliziumcarbid, Siliziumnitrid, Titandioxid, Eisenoxid, Calciumoxid, Borcarbid, Bornitrid und Gemischen davon.

15. Verfahren nach Anspruch 14, bei dem das disperse Material ausgewählt ist aus Aluminiumoxid, Zirkonoxid, Siliziumcarbid, Siliziumnitrid und Gemischen davon.

16. Verwendung eines (Poly)Alkylen-Polyamins als Grünfestigkeits-Additiv bei der Herstellung von keramischen Erzeugnissen, die nicht Porzellan und Steingut sind, aus einer Schlicker-Zusammensetzung.

**17.** Verwendung nach Anspruch 16, bei der das (Poly)Alkylen-Polyamin wie in einem der Ansprüche 2 bis 6 definiert ist.

**18.** Schlicker-Zusammensetzung zur Herstellung keramischer Erzeugnisse, die nicht Porzellan und Steingut sind, welche umfaßt:
(1) ein Schlicker-Medium;
(2) ein disperses Material;
(3) ein (Poly)Alkylen-Polyamin in einer Menge, die zur Erhöhung der Grünfestigkeit von aus der Schlicker-Zusammenstzung hergestellten keramischen Erzeugnissen, die nicht Porzellan und Steingut sind, wirksam ist,
wobei die Schlicker-Zusammensetzung keinen Glassatz und keine Schwefelblumen enthält.

**19.** Schlicker-Zusammensetzung nach Anspruch 18, bei der das (Poly)Alkylen-Polyamin wie in einem der Ansprüche 2 bis 6 definiert ist.

**20.** Schlicker-Zusammensetzung nach Anspruch 18 oder Anspruch 19, bei der die Zusammensetzung wie in einem der Ansprüche 7 bis 13 definiert ist.

**21.** Schlicker-Zusammensetzung nach einem der Ansprüche 18 bis 20, bei der das disperse Material wie in Anspruch 14 oder Anspruch 15 definiert ist.

**Revendications**
**Revendications pour les Etats contractants suivants : CH, FR, GB, IT, LI, NL, SE**

**1.** Procédé de préparation d'articles céramiques non porcelaniques à partir d'une composition de barbotine exempte de fleur de soufre comprenant un milieu de barbotine et un matériau particulaire céramique, caractérisé en ce que la composition de barbotine comprend une (poly)alkylène polyamine en une quantité efficace pour augmenter la résistance à l'état cru d'articles préparés à partir de la composition de barbotine.

**2.** Procédé selon la revendication 1, dans lequel la (poly)alkylène polyamine possède une masse moléculaire moyenne inférieure à 1 000.

**3.** Procédé selon la revendication 2, dans lequel la (poly)alkylène polyamine possède la formule

$$H_2N - [ - (CH_2)_n - (CH_2\text{-}CH_2\text{-}NH)_m - ]_p - H$$

dans laquelle n est compris entre zéro et 6, m est compris entre 1 et 6, et p est compris entre 1 et 15, à condition que n et m puissent varier indépendamment à l'intérieur d'une molécule d'un motif répété au suivant.

**4.** Procédé selon la revendication 3, dans lequel n est 0, p est 1 et m est compris entre 3 et 6.

**5.** Procédé selon la revendication 3 ou 4, dans lequel la (poly)alkylène polyamine est une éthylène polyamine ayant une masse moléculaire moyenne supérieure à 150 et inférieure à 800.

**6.** Procédé selon la revendication 5, dans lequel la (poly)alkylène polyamine est la tétraéthylènepentamine.

**7.** Procédé selon l'une quelconque des revendications précédentes, dans lequel la (poly)alkylène polyamine est présente en une quantité d'au moins 0,01 et pas plus de 1,5 pourcent en poids par rapport à la teneur en solides totaux de la composition de barbotine.

**8.** Procédé selon l'une quelconque des revendications précédentes, dans lequel la barbotine comprend un liant en une quantité efficace pour maintenir la viscosité de la barbotine et le poids de coulée d'articles

céramiques non porcelaniques préparés à partir de celle-ci.

**9.** Procédé selon la revendication 8, dans lequel ledit liant est un latex.

**10.** Procédé selon la revendication 9, dans lequel ledit latex est un latex styrène-butadiène.

**11.** Procédé selon l'une quelconque des revendications 8 à 10, dans lequel ledit liant est présent en une quantité d'au moins 0,01 et pas plus de 6,5 pourcent en poids par rapport à la teneur en solides totaux de la composition de barbotine.

**12.** Procédé selon l'une quelconque des revendications 8 à 11, dans lequel le rapport pondéral du (poly)-alkylène polyamine au liant est d'au moins 30:70 et ne dépasse pas 70:30.

**13.** Procédé selon l'une quelconque des revendications précédentes, dans lequel la (poly)alkylène polyamine, éventuellement en mélange avec au moins une partie du liant, s'il est présent, a été ajoutée au milieu de barbotine avant le matériau particulaire.

**14.** Procédé selon l'une quelconque des revendications précédentes, dans lequel on choisit le matériau particulaire parmi l'alumine, le nitrure d'aluminium, l'oxyde de zirconium, l'oxyde d'yttrium, le spinelle, le carbure de silicium, le nitrure de silicium, le dioxyde de titane, l'oxyde de fer, l'oxyde de calcium, le carbure de bore, le nitrure de bore, et leurs mélanges.

**15.** Procédé selon la revendication 14, dans lequel le matériau particulaire est choisi parmi l'alumine, l'oxyde de zirconium, le carbure de silicium, le nitrure de silicium, et leurs mélanges.

**16.** Utilisation d'une (poly)alkylène polyamine en tant qu'additif de résistance mécanique à l'état cru dans la fabrication d'articles céramiques non porcelaniques à partir d'une composition de barbotine.

**17.** Utilisation selon la revendication 16, dans laquelle la (poly)alkylène amine est telle que définie selon l'une quelconque des revendications 2 à 6.

**18.** Composition de barbotine pour fabriquer un article céramique non porcelanique comprenant:
(1) un milieu de barbotine;
(2) un matériau particulaire;
(3) une (poly)alkylène polyamine en une quantité efficace pour augmenter la résistance mécanique à l'état cru d'articles céramiques non porcelaniques préparés à partir de ladite composition de barbotine,
ladite composition de barbotine étant exempte d'argile, d'aluminosilicate, de silice, de fritte, et de fleur de soufre.

**19.** Composition de barbotine selon la revendication 18, dans laquelle la (poly)alkylène polyamine est telle que définie dans l'une quelconque des revendications 2 à 6.

**20.** Composition de barbotine selon la revendication 18 ou 19 dans laquelle la composition est telle que définie dans l'une quelconque des revendications 7 à 13.

**21.** Composition de barbotine selon les revendications 18 à 20, dans laquelle le matériau particulaire est tel que défini dans la revendication 14 ou 15.

**Revendications pour l'Etat contractant suivant : ES**

**1.** Procédé de préparation d'articles céramiques non porcelaniques à partir d'une composition de barbotine exempte de fleur de soufre comprenant un milieu de barbotine et un matériau particulaire céramique, caractérisé en ce que la composition de barbotine comprend une (poly)alkylène polyamine en une quantité efficace pour augmenter la résistance à l'état cru d'articles préparés à partir de la composition de barbotine.

**2.** Procédé selon la revendication 1, dans lequel la (poly)alkylène polyamine possède une masse moléculaire moyenne inférieure à 1 000.

**3.** Procédé selon la revendication 2, dans lequel la (poly)alkylène polyamine possède la formule

$$H_2N-\left[-(CH_2)_n-(CH_2-CH_2-NH)_m-\right]_p-H$$

dans laquelle n est compris entre 0 et 6, m est compris entre 1 et 6 et p est compris entre 1 et 15 à condition que n et m puissent varier indépendamment à l'intérieur de la molécule d'un motif répété au suivant.

**4.** Procédé selon la revendication 3, dans lequel n est 0, p est 1, et m est compris entre 3 et 6.

**5.** Procédé selon la revendication 3 ou 4, dans lequel la (poly)alkylène polyamine est une éthylène polyamine ayant une masse moléculaire moyenne supérieure à 150 et inférieure à 800.

**6.** Procédé selon la revendication 5, dans lequel la (poly)alkylène polyamine est la tétraéthylènepentamine.

**7.** Procédé selon l'une quelconque des revendications précédentes, dans lequel la (poly)alkylène polyamine est présente en une quantité d'au moins 0.01 et pas plus de 1,5 pourcent en poids par rapport à la teneur en solides totaux de la composition de barbotine.

**8.** Procédé selon l'une quelconque des revendications précédentes, dans lequel la barbotine comprend un liant en une quantité efficace pour maintenir la viscosité de la barbotine et le poids de coulée d'articles céramiques non porcelaniques préparés à partir de celle-ci.

**9.** Procédé selon la revendication 8, dans lequel ledit liant est un latex.

**10.** Procédé selon la revendication 9, dans lequel ledit latex est un latex styrène-butadiène.

**11.** Procédé selon l'une quelconque des revendications 8 à 10, dans lequel ledit liant est présent en une quantité d'au moins 0,01 et pas plus de 6,5 pourcent en poids par rapport à la teneur en solides totaux de la composition de barbotine.

**12.** Procédé selon l'une quelconque des revendications 8 à 11, dans lequel le rapport pondéral du (poly)-alkylène polyamine au liant est d'au moins 30:70 et ne dépasse pas 70:30.

**13.** Procédé selon l'une quelconque des revendications précédentes, dans lequel la (poly)alkylène polyamine, éventuellement en mélange avec au moins une partie du liant, s'il est présent, a été ajoutée au milieu de barbotine avant le matériau particulaire.

**14.** Procédé selon l'une quelconque des revendications précédentes, dans lequel on choisit le matériau particulaire parmi l'alumine, le nitrure d'aluminium, l'oxyde de zirconium, la mullite, la silice, l'oxyde d'yttrium, le spinelle, le carbure de silicium, le nitrure de silicium, le dioxyde de titane, l'oxyde de fer, l'oxyde de calcium, le carbure de bore, le nitrure de bore, et leurs mélanges.

**15.** Procédé selon la revendication 14, dans lequel le matériau particulaire est choisi parmi l'alumine, l'oxyde de zirconium, le carbure de silicium, le nitrure de silicium, et leurs mélanges.

**16.** Utilisation d'une (poly)alkylène polyamine en tant qu'additif de résistance mécanique à l'état cru dans la fabrication d'articles céramiques non porcelaniques à partir d'une composition de barbotine.

**17.** Utilisation selon la revendication 16, dans laquelle la (poly)alkylène amine est telle que définie selon l'une quelconque des revendications 2 à 6.

**18.** Composition de barbotine pour fabriquer un article céramique non porcelanique comprenant :
(1) un milieu de barbotine;
(2) un matériau particulaire;
(3) une (poly)alkylène polyamine en une quantité efficace pour augmenter la résistance mécanique à l'état cru d'articles céramiques non porcelaniques préparés à partir de ladite composition de barbotine,
ladite composition de barbotine étant exempte de fritte et de fleur de soufre.

**19.** Composition de barbotine selon la revendication 18, dans laquelle la (poly)alkylène polyamine est telle que définie dans l'une quelconque des revendications 2 à 6.

**20.** Composition de barbotine selon la revendication 18 ou 19 dans laquelle la composition est telle que définie dans l'une quelconque des revendications 7 à 13.

**21.** Composition de barbotine selon les revendications 18 à 20, dans laquelle le matériau particulaire est tel que défini dans la revendication 14 ou 15.